# EUROPÄISCHE PATENTSCHRIFT

(11) **EP 0 912 303 B1**
(45) Veröffentlichungstag und Bekanntmachung des Hinweises auf die Patenterteilung: **27.03.2002**
(21) Anmeldenummer: 97929113.5
(22) Anmeldetag: 19.06.1997
(51) Int. Cl.: B26D 3/08, B29C 49/22, B65D 83/00

(54) **VERFAHREN ZUR HERSTELLUNG EINES BEHÄLTERS MIT DRUCKAUSGLEICHSÖFFNUNGEN**
PROCESS FOR MANUFACTURING A CONTAINER PROVIDED WITH PRESSURE COMPENSATION HOLES
PROCEDE DE FABRICATION D'UN RECIPIENT POURVU D'OUVERTURES D'EQUILIBRAGE DE LA PRESSION

(30) Priorität: 04.07.1996 DE 19626967
(43) Veröffentlichungstag der Anmeldung: 06.05.1999
(73) Patentinhaber: GAPLAST GmbH, D-82442 Altenau (DE)
(72) Erfinder: KNEER, Roland, D-82490 Farchant (DE)
(74) Vertreter: Flosdorff, Jürgen, Dr.
(86) Internationale Anmeldenummer: DE9701250
(87) Internationale Veröffentlichungsnummer: WO9801268

(56) Entgegenhaltungen:
- EP-A- 0 182 094
- EP-A- 0 532 873
- EP-A- 0 550 772
- EP-A- 0 759 399
- WO-A-92/12926
- US-A- 4 966 543
- PATENT ABSTRACTS OF JAPAN vol. 095, no. 003, 28.April 1995 & JP 06 345069 A (TOYO SEIKAN KAISHA LTD), 20.Dezember 1994,

## Beschreibung

Die Erfindung betrifft ein Verfahren zur Herstellung eines Behälters bestehend aus einem im wesentlichen steifen Außenbehälter und einem leicht verformbaren Innenbeutel aus jeweils verschiedenartigen, keine Schweißverbindung miteinander eingehenden thermoplastischen Kunststoffen, mit einer Behälteröffnung und wenigstens einer Wandöffnung in dem Außenbehälter, durch die ein Druckausgleich in dem Bereich zwischen dem Innenbeutel und dem Außenbehälter erfolgt, wobei ein aus wenigstens zwei Schläuchen bestehender Vorformling coextrudiert und zwischen den geöffneten Hälften einer Blasform angeordnet wird, die Blasform geschlossen wird, wenn der Vorformling die zur Herstellung des Behälters erforderliche Länge hat, wobei im Bodenbereich des herzustellenden Behälters ein nach außen vorstehender Steg aus verschweißtem Material des Außenbehälters ausgebildet wird, in dem die verschweißte Bodennaht des Innenbeutels eingeklemmt und in axialer Richtung gehalten ist, und der Vorformling durch ein Druckmedium bis zur Anlage an der Wandung der Blasform aufgeblasen und aus der Blasform entnommen wird.

Ein Verfahren der betrachteten Art ist in der DE 41 39 555 C2 offenbart. Dabei wird die geschlossene, wenigstens teilweise verschweißte Bodennaht des Außenbehälters durch besondere Formgebung des bodenseitigen Quetschbereichs der Blasform ausgebildet, wobei hier sowohl das Überschußmaterial abgequetscht als auch Material des Außenbehälters beidseitig zu einem im Querschnitt drachenförmigen Steg zusammengeführt wird, aus dem sich die verschweißte Bodennaht des Innenbehälters infolge des Staudrucks in dem den Steg ausbildenden Hohlraum in Richtung des Behälterinnenraums ein wenig zurückzieht, so daß das Material des Außenbehälters über einen Teilbereich des Steges miteinander verschweißt wird. In dem darüber liegenden Bereich ist die Schweißnaht des Innenbeutels eingeklemmt. Dabei kann der vorstehende Steg am Boden des Außenbehälteres auch eine andere Querschnittsform, beispielsweise eine gewölbte Form haben.

Zur Ausbildung der verschweißten Bodennaht des Außenbehälters und zum Einklemmen der bodenseitigen Schweißnaht des Innenbeutels wird ausdrücklich auf die Offenbarung der DE 41 39 555 C2 verwiesen.

An der Behälteröffnung des Behälters der betrachteten Art kann eine Pumpe angebracht sein, mit der der Behälterinhalt, der in den Innenbeutel aufgenommen ist, ausgebracht werden kann. Bei dem Behälter kann es sich aber auch um einen Quetschbehälter handeln, bei dem der Außenbehälter zum Ausbringen des Behälterinhalts von Hand zusammengedrückt wird, um dann wieder in seine Ausgangsform zurückzukehren.

Bei dem aus der DE 41 39 555 C2 bekannten Behälter erfolgt der Druckausgleich, der durch die mit der Abgabe des Behälterinhalts verbundene Volumenverringerung des Innenbeutels erforderlich wird, durch unverschweißte Schulternähte des Außenbehälters, die dadurch ausgebildet werden, daß der coextrudierte Rohling einen größeren Durchmesser hat als der Halsbereich der Blasform, so daß der Rohling im Schulterbereich und am Hals des herzustellenden Behälters beim Schließen der Blasform zur Beseitigung des Überschußmaterials abgequetscht wird. Dies geschieht ohne Ausbildung eines außen vorstehenden Stegs wie bei der Bodennaht, so daß beim glatten Abquetschvorgang im Quetschbereich des Schulterabschnitts sowie des Halsabschnitts Material des Innenbeutels zwischen dem hierdurch beabstandeten Material des Außenbehälters verbleibt, so daß das letztere nicht miteinander verschweißt werden kann, da sich hier das Material des Innenbeutels nicht zurückzieht. Demnach bildet sich hier eine geschlossene Schweißnaht am Innenbeutel aus, durch die die Dichtigkeit des Innenbeutels gewährleistet ist, und durch die beidseitig offenen Schulternähte des Außenbehälters kann Luft aus der umgebenden Atmosphäre zum Druckausgleich eintreten. Zusätzlich können im Schulterbereich Druckausgleichslöcher vorgesehen sein.

Diese Ausbildung hat den Nachteil, daß der Behälter von den offenen Schulternähten des Außenbehälters an aus zwei im wesentlichen lose aneinanderliegenden Halbschalen besteht. Wenn der Behälter mit einer Pumpe ausgerüstet wird und diese Pumpe mit einer leichten Schräglage auf die beiden Hals-Hälften aufgesetzt wird, können sich die beiden Halbschalen ein wenig gegeneinander verschieben, wodurch sich am oberen Rand ein Absatz bildet, durch den der Behälter undicht wird, da auch eine dort vorgesehene Gummieinlage die entstandene Unebenheit nicht ausgleichen kann. Außerdem können auf die bekannte Weise nur Behälter mit Schulterabschnitten mit den offenen Druckausgleichsnähten versehen werden, während bei sogenannten Weithalsgefäßen, die keine Schulterabschnitte haben, auf diese Weise keine Druckausgleichsöffnungen ausgebildet werden können.

Die WO 92/12926 offenbart zwei Vorgehensweisen, um eine Wandöffnung in einem im Spritzgußverfahren hergestellten, mehrschichtigen Vorformling auszubilden. Zum einen wird offenbart, daß ein Verlängerungsstück einer Einspritzdüse in das noch im Schmelzzustand befindliche Kunststoffmaterial der Außenschichten bis zu innersten Schicht eingeführt wird, so daß hierdurch in den Außenschichten eine Öffnung ausgebildet wird. Eine solche Vorgehensweise ist bei einem bereits aus der Blasform entnommenen, fertigen Behälter nicht anwendbar. Als alternative Vorgehensweise ist offenbart, im Anschluß an den Spritzgußprozeß eine Wandöffnung mittels eines Bohrers auszubilden, der die Außenschichten bis zu der Innenschicht durchbohrt. Hierbei besteht die Gefahr, daß die Innenschicht durch den Bohrer beschädigt wird.

Der vorliegenden Erfindung liegt die Aufgabe zugrunde, ein Verfahren anzugeben, mit dem bei Behältern der betrachteten Art Druckausgleichsöffnungen in der Wand des Außenbehälters hergestellt werden können, die nicht durch unverschweißte Nahtstellen in einem Schulterbereich des Behälters gebildet sind und wobei gewährleistet ist, daß der Innenbeutel nicht beschädigt wird. Das Verfahren soll auch auf sogenannte Weithalsgefäße anwendbar sein.

Diese Aufgaben werden durch die Merkmale der Patentansprüche 1, 3 und 7 gelöst.

Vorteilhafte Weiterbildungen der Erfindung sind in den abhängigen Ansprüchen gekennzeichnet.

Gemäß der vorliegenden Erfindung werden die Wandöffnungen des Außenbehälters im Anschluß an den Blasvorgang dadurch ausgebildet, daß in die Wand des Außenbehälters auf mechanischem Wege wenigstens eine, bevorzugt zwei oder auch mehr Öffnungen eingeschnitten, eingestanzt, eingestochen oder gebohrt werden, oder aber mittels Laser eingeschnitten werden, wobei ein innerer Wandabschnitt zunächst unbeeinträchtigt bleiben kann, um eine Beschädigung des anliegenden Innenbeutels mit Sicherheit zu verhindern. Der Grund hierfür liegt darin, daß gewisse Toleranzen der Wandstärke des Außenbehälters unvermeidlich sind und daß in der Praxis für den vorliegenden Fall keine Meßverfahren vorliegen, mit denen die jeweilige Wandstärke mit äußerster Genauigkeit gemessen werden kann, um ein vollständiges mechanisches Durchtrennen der Wand des Außenbehälters unter Gewährleistung einer vollständigen Verschonung des Innenbeutels vom Schneidvorgang etc. zu gewährleisten. Der restliche innere Wandabschnitt wird dann erfindungsgemäß durch Aufbringen einer Kraft aufgebrochen bzw. aufgerissen. Hierdurch kann der Innenbeutel nicht beschädigt werden.

In Ausgestaltung dieser Erfindung ist in einem ersten Verfahren vorgesehen, daß die wenigstens eine Wandöffnung, bevorzugt zwei (oder auch mehr) Wandöffnungen dadurch ausgebildet werden, daß ein Schnitt bzw. eine Kerbe in die Wand des Außenbehälters geschnitten oder gestanzt oder durch Laser ausgebildet wird, die die Wand bis auf einen geringen restlichen Wandabschnitt durchdringt, und daß dieser restliche Wandabschnitt durch Krafteinwirkung geöffnet wird.

Dieser Schneid- oder Stanzvorgang erfolgt bevorzugt spanlos mit einem scharfen Messer oder Stanzwerkzeug oder mittels Laser, so daß keine Partikel abgelöst werden, die abgesaugt werden müßten, wenn die Möglichkeit einer Kontamination ausgeschlossen werden soll. Dabei liegt es aber im Rahmen der Erfindung, daß auch ein wenig Wandmaterial weggeschnitten werden kann, wenn beispielsweise eine etwas größere Wandöffnung zum schnelleren Druckausgleich wünschenswert ist. Der erforderliche Druckausgleich ist jedoch bereits -wenn auch etwas langsamer- durch eine kapillarartige Öffnung zu erreichen, wie sie z.B. durch einen glatten Schnitt hervorgerufen wird.

Zur Ausführung dieses Verfahrens kann eine Vorrichtung verwendet werden, die einen Einspannblock enthält, die den fertig geblasenen und bevorzugt bereits erkalteten Behälter mindestens teilweise umschließt. In dem Einspannblock kann ein sich bis zur Behälterwand erstreckender Schlitz ausgebildet sein, in den ein Messer hineinragt, welches außerhalb des Einspannblocks schwenkbar gehalten ist. Wenn das Messer von einer Antriebseinrichtung verschwenkt wird, führt die Messerspitze eine solche kreisförmige Bewegung aus, daß sie eine Kerbe in die Behälterwand einschneidet, die sich bis auf eine kleine Sicherheitswandstärke durch die Wand des Außenbehälters erstreckt. Wenn der Außenbehälter beispielsweise eine Wandstärke von 0,7 bis 0,9 mm hat, verbleibt bevorzugt ein unverletzter Sicherheits-Wandabschnitt von 0,2 mm bestehen. Dabei kann der Außenbehälter z.B. aus Polypropylen bestehen, ohne daß die Erfindung hierauf beschränkt ist.

Die vorgeschlagene Vorrichtung kann ferner eine zum Aufnahmeraum des Behälters führende Durchgangsbohrung haben, durch die ein Brechstempel vorgeschoben werden kann, um den restlichen Wandabschnitt aufzubrechen. Hierzu sollte der Behälter so in der Aufnahmeöffnung des Einspannblocks gedreht werden, daß der Brechstempel auf eine Seite der Kerbe bzw. des Schnitts auftrifft, wenn er durch Aufbringen einer Vortriebskraft vorwärts geschoben wird. Hierdurch bricht oder reißt der sehr dünne verbleibende Wandabschnitt auf, wodurch eine Druckausgleichöffnung in der Behälterwand hergestellt ist. Der Schneidvorgang und das Aufbrechen der Öffnung können auch in einem Arbeitsgang erfolgen, indem Messer und Brechstempel zu einer Einheit zusammengefügt und gemeinsam verschwenkt werden, wobei der Brechstempel auf die Außenbehälterwand auftrifft.

Die Druckausgleichsöffnungen können an beliebiger Stelle der Außenwand ausgebildet werden, und es ist nicht erforderlich, daß der jeweilige Behälter hierzu Schulterabschnitte aufweist. Dies bedeutet, daß auch Weithalsgefäße auf die erfindungsgemäße Weise mit Druckausgleichsöffnungen versehen werden können.

Das Aufbrechen oder Aufreißen des restlichen Sicherheits-Wandabschnitts kann nicht nur dadurch bewerkstellig werden, daß eine Druckkraft auf eine Seite der Schneidöffnung ausgeübt wird, sondern es gibt vielfältige Möglichkeiten, die dünne Restwand zu öffnen.

Gemäß der vorliegenden Erfindung können die Druckausgleichsöffnungen auch dadurch ausgebildet werden, daß beim Blasvorgang in der Wand des Außenbehälters wenigstens eine, bevorzugt zwei oder mehr Ausbauchungen mit einer inneren Einbuchtung geformt werden, und daß die Ausbauchungen wiederum bevorzugt bis auf einen geringen restlichen Sicherheits-Wandabschnitt abgeschnitten werden, der dann durch Krafteinwirkung geöffnet wird. Die Ausbauchungen können schmale Rippen oder beispielsweise kalottenförmige Vorsprünge sein, die durch entsprechende Vertiefungen in der Wand der Blasform hervorgerufen werden. Die Einbuchtung, d.h. die Innenwand des Außenbehälters, ist bevorzugt gegenüber der die Ausbauchung umgebenden Außenwand um die restliche Sicherheitswandstärke nach innen zurückversetzt, z.B. um 0,2 mm, die dann übrigbleiben, wenn die Ausbauchung in der Weise weggeschnitten wird, daß der restliche Wandabschnitt mit der umgebenden Außenwand fluchtet. Das Abtragen der Ausbauchung ist dabei natürlich nicht auf einen einzigen Schneidvorgang beschränkt, vielmehr kann die Ausbauchung auch z.B. abgefräst oder abgeschliffen werden. Der restliche Sicherheitswandabschnitt kann dann wieder durch Aufbringen einer Kraft geöffnet werden.

Nach einem weiteren Vorschlag der Erfindung kann die wenigstens eine Druckausgleichs-Wandöffnung auch dadurch ausgebildet werden, daß die Wand des Außenbehälters durchstochen oder durchbohrt wird, wobei beim vollständigen Durchdringen der Wand ein Medium gegen die Wand des Innenbeutels geblasen oder gespritzt wird. Dieses Medium sollte unter einem so hohen Druck stehen, daß der Innenbeutel in einem ausreichenden Maße vom Außenbehälter abgehoben, d.h. nach innen gedrückt wird, um zu gewährleisten, daß der Innenbeutel von der durch die Wand des Außenbehälters hindurchgestoßenen oder hindurchgebohrten Einsteck- oder Bohrnadel nicht verletzt wird. Dies kann dadurch bewerkstelligt werden, daß die Einstecknadel oder Bohrnadel einen zentralen Kanal enthält, der mit der Mediumquelle in Verbindung steht, so daß im Augenblick des Durchtritts der Einstechnadel oder Bohrnadel aus ihrer Spitze das Druckmittel gegen die Wand des Innenbeutels geblasen oder gespritzt wird. Bei dem Medium kann es sich beispielsweise um Wasser, Luft oder um ein Gel handeln.

Das erfindungsgemäße Herstellungsverfahren macht es möglich, daß der coextrudierte Rohling einen Durchmesser hat, der kleiner als der Durchmesser des Behälterhalses ist, da im Schulterbereich kein Überschußmaterial zur Bildung unverschweißter Außenbehälternähte abgequetscht werden muß. Dies macht es wiederum möglich, daß im Bodenbereich die Quetschnaht eine geringere Länge hat als der Durchmesser des herzustellenden Behälters.

Nachfolgend werden weitgehend schematisch wesentliche Bestandteile einer Vorrichtung beschrieben, mit der die erfindungsgemäßen Schritte der Ausbildung von Druckausgleichsöffnungen in der Wand eines im Coextrusions-Blasverfahren hergestellten Behälters durchgeführt werden können. Dabei zeigen:
- Fig. 1: eine weitgehend schematische Seitenansicht wesentlicher Bestandteile der Vorrichtung und
- Fig. 2: eine Aufsicht auf die Vorrichtung gemäß Fig. 1.

Ein Einspannblock 1 enthält einen Aufnahmeraum, der mit der Außenkontur des oberen Teils eines Behälters 2 übereinstimmt, der im Coextrusions-Blasverfahren hergestellt wurde. Der Behälter 2 wird von unten in den Hohlraum des Einspannblocks eingeführt und -obwohl dies in den Figuren nicht dargestellt ist- darin durch eine Halteeinrichtung fixiert.

In den Einspannblock 1 ist ein in den Hohlraum einmündender Schlitz 3 ausgebildet, in den eine Messerklinge 4 hineinragt, die an einem Messerhalter 5 befestigt ist, der seinerseits von einem Schwenkarm 6 gehalten wird. Der Schwenkarm ist um eine Achse 7 drehbar, und zwar mittels einer nicht dargestellten Antriebseinrichtung.

Die Spitze der Messerklinge 4 wird auf einem solchen Radius verschwenkt, daß hierbei im Schulterbereich des Behälters 2 ein Schnitt durch die Wand des Außenbehälters ausgeführt wird, der bis auf eine kleine Sicherheits-Wandstärke die Wand durchtrennt. Zur Einstellung des Radius der Messerklinge ist der Messerhalter 5 in einer ausgewählten Länge an dem Schwenkarm 6 befestigt, wozu der Messerhalter beispielweise mit einem Langloch 8 versehen sein kann, das von einer Befestigungsschraube 9 durchgriffen wird.

Es versteht sich, daß der Schnitt bzw. die Kerbe in der Wand des Außenbehälters an jeder beliebigen Stelle der Umfangswand oder auch des Bodens ausgeführt werden kann und daß der Behälter hierzu keinen Schulterabschnitt haben muß.

Der Einspannblock 1 enthält ferner eine in den Behälter-Aufnahmeraum führende Durchgangsbohrung 10, durch die ein Brechstempel (nicht dargestellt) gegen die Behälterwand vorgeschoben werden kann. Hierzu wird der Behälter 2 soweit in dem Behälteraufnahmeraum gedreht, daß die Durchgangsbohrung 10 direkt seitlich neben dem Schnitt bzw. der Kerbe einmündet. Der Brechstempel wird mittels einer nicht dargestellten Vortriebsvorrichtung kräftig gegen die Behälterwand gedrückt, wodurch der dünne verbliebene Sicherheitswandabschnitt aufplatzt.

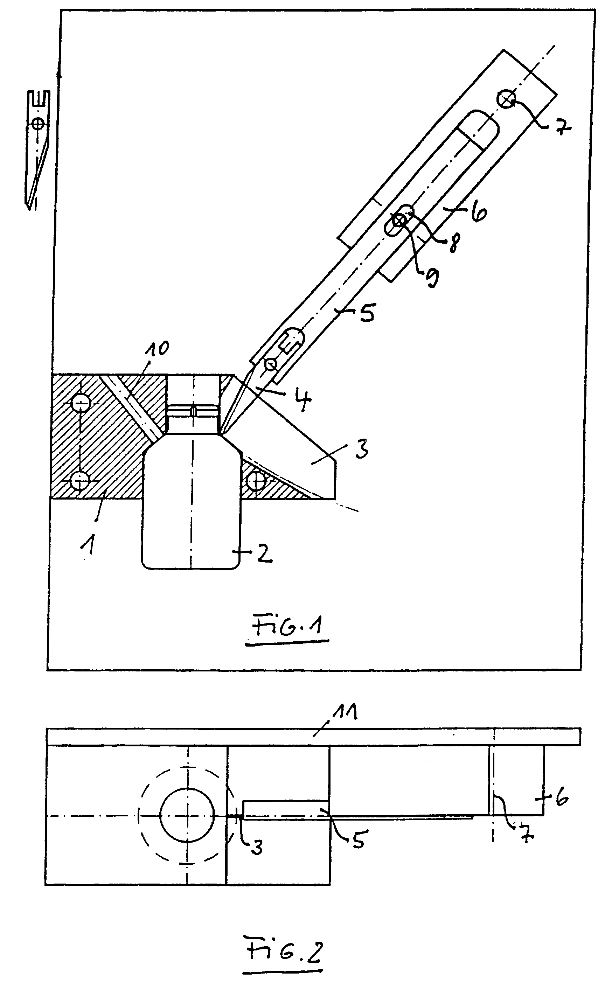

Fig. 2 läßt erkennen, daß der Einspannblock 1 und die schwenkbare Messeranordnung an einem gemeinsamen Rahmen 11 angebracht sein können.

Wenn bevorzugt zwei Druckausgleichsöffnungen in der Wand der Außenbehälters ausgebildet sind, wird der Innenbeutel durch Aufbringen eines Vakuums an der Behälteröffnung von dem Außenbehälter abgelöst, um eine Adhäsion zwischen Innenbeutel und Außenbehälter zu vermeiden. Hierbei erfolgt zweckmäßigerweise auch eine Dichtigkeitsprüfung des Innenbeutels. Anschließend wird der Innenbeutel durch Überdruck wieder an den Außenbehälter angelegt, womit der Behälter bereit zur Aufnahme des vorgesehenen Behälterinhalts ist.

## Patentansprüche

1. Verfahren zur Herstellung eines Behälters (2) bestehend aus einem im wesentlichen steifen Außenbehälter und einem leicht verformbaren Innenbeutel aus jeweils verschiedenartigen, keine Schweißverbindung miteinander eingehende thermoplastischen Kunststoffen, mit einer Behälteröffnung und wenigstens einer Wandöffnung in dem Außenbehälter, durch die ein Druckausgleich in dem Bereich zwischen dem Innenbeutel und dem Außenbehälter folgt, wobei ein aus wenigstens zwei Schläuchen bestehender Vorformling coextrudiert und zwischen den geöffneten Hälften einer Blasform angeordnet wird, die Blasform geschlossen wird, wenn der Vorformling die zur Herstellung des Behälters erforderliche Länge hat, wobei überschußmaterial im Bodenbereich des herzustellenden Behälters abgequetscht und ein nach außen vorstehender Steg aus verschweißtem Material des Außenbehälters ausgebildet wird, in dem die verschweißte Bodennaht des Innenbeutels eingeklemmt und in axialer Richtung gehalten ist und der Vorformling durch ein Druckmedium zur Anlage an die Wandung der Blasform aufgeblasen und aus der Blasform entnommen wird,
**dadurch gekennzeichnet,**
**daß** die wenigstens eine Wandöffnung dadurch ausgebildet wird, daß ein Schnitt bzw. eine Kerbe in die Wand des Außenbehälters geschnitten oder gestanzt wird, die die Wand bis auf einen geringen restlichen Wandabschnitt durchdringt, und daß der restliche Wandabschnitt durch Krafteinwirkung geöffnet wird.

2. Verfahren nach Anspruch 1,
**dadurch gekennzeichnet, daß** der Stanz- oder Schneidvorgang spanlos erfolgt.

3. Verfahren zur Herstellung eines Behälters (2) bestehend aus einem im wesentlichen steifen Außenbehälter und einem leicht verformbaren Innenbeutel aus jeweils verschiedenartigen, keine Schweißverbindung miteinander eingehende thermoplastischen Kunststoffen, mit einer Behälteröffnung und wenigstens einer Wandöffnung in dem Außenbehälter, durch die ein Druckausgleich in dem Bereich zwischen dem Innenbeutel und dem Außenbehälter folgt, wobei ein aus wenigstens zwei Schläuchen bestehender Vorformling coextrudiert und zwischen den geöffneten Hälften einer Blasform angeordnet wird, die Blasform geschlossen wird, wenn der Vorformling die zur Herstellung des Behälters erforderliche Länge hat, wobei überschußmaterial im Bodenbereich des herzustellenden Behälters abgequetscht und ein nach außen vorstehender Steg aus verschweißtem Material des Außenbehälters ausgebildet wird, in dem die verschweißte Bodennaht des Innenbeutels eingeklemmt und in axialer Richtung gehalten ist und der Vorformling durch ein Druckmedium zur Anlage an die Wandung der Blasform aufgeblasen und aus der Blasform entnommen wird,
**dadurch gekennzeichnet, daß** die wenigstens eine Wandöffnung dadurch ausgebildet wird, daß in der Wand des Außenbehälters eine kleine Ausbauchung mit einer inneren Einbuchtung geformt wird und daß die Ausbauchung bis auf einen geringen restlichen Wandabschnitt abgeschnitten oder abgetragen wird und der restliche Wandabschnitt durch Krafteinwirkung geöffnet wird.

4. Verfahren nach einem der Ansprüche 1 bis 3,
**dadurch gekennzeichnet, daß** der restliche Wandabschnitt aufgerissen wird.

5. Verfahren nach Anspruch 4,
**dadurch gekennzeichnet, daß** auf einer Seite der Kerbe bzw. des Schnitts die Wand nach innen gepreßt wird.

6. Verfahren nach Anspruch 3,
**dadurch gekennzeichnet, daß** die Ausbauchung in der Weise weggeschnitten wird, daß der restliche Wandabschnitt mit der umgebenden Außenwand fluchtet.

7. Verfahren zur Herstellung eines Behälters (2) bestehend aus einem im wesentlichen steifen Außenbehälter und einem leicht verformbaren Innenbeutel aus jeweils verschiedenartigen, keine Schweißverbindung miteinander eingehende thermoplastischen Kunststoffen, mit einer Behälteröffnung und wenigstens einer Wandöffnung in dem Außenbehälter, durch die ein Druckausgleich in dem Bereich zwischen dem Innenbeutel und dem Außenbehälter folgt, wobei ein aus wenigstens zwei Schläuchen bestehender Vorformling coextrudiert und zwischen den geöffneten Hälften einer Blasform angeordnet wird, die Blasform geschlossen wird, wenn der Vorformling die zur Herstellung des Behälters erforderliche Länge hat, wobei Überschußmaterial im Bodenbereich des herzustellenden Behälters abgequetscht und ein nach außen vorstehender Steg aus verschweißtem Material des Außenbehälters ausgebildet wird, in dem die verschweißte Bodennaht des Innenbeutels eingeklemmt und in axialer Richtung gehalten ist und der Vorformling durch ein Druckmedium zur Anlage an die Wandung der Blasform aufgeblasen und aus der Blasform entnommen wird,
**dadurch gekennzeichnet, daß** die wenigstens eine Wandöffnung dadurch ausgebildet wird, daß die Wand des Außenbehälters durchstochen oder durchbohrt wird und daß bei vollständiger Durchdringung der Wand des Außenbehälters ein Medium gegen die Wand des Innenbeutels geblasen oder gespritzt wird um eine Beschädigung des Innenbeutels durch das Werkzeug zum Durchstechen oder Durchbahren zu vermeiden.

8. Verfahren nach Anspruch 7,
**dadurch gekennzeichnet, daß** das Medium durch eine Bohrung der Einstechnadel oder des Bohrers ausgeblasen oder ausgespritzt wird.

9. Verfahren nach Anspruch 7 oder 8,
**dadurch gekennzeichnet, daß** das Medium Luft, Wasser oder ein Gel ist.

## Claims

1. Method of manufacturing a container (2) comprising a substantially stiff outer container and a readily deformable inner bag of different thermoplastic plastic materials with no welded connection, including a container opening and at least one wall opening in the outer container, through which a pressure balance occurs in the region between the inner bag and the outer container, wherein a preform comprising at least two tubes is co-extruded and is arranged between the open halves of a blow mould, the blow mould is closed, when the preform has the length necessary for producing the container, whereby excess material is squeezed away in the base region of the container to be produced and an outwardly projecting web is formed from welded material of the outer container, in which the welded base seam of the inner bag is clamped and held in the axial direction and the preform is inflated by a pressure medium until it engages the wall of the blow mould and is removed from the blow mould, **characterised in that** the at least one wall opening is formed by cutting or stamping a cut or a notch in the wall of the outer container which passes through the wall with the exception of a small remaining wall section and that the remaining wall section is opened by the application of force.

2. Method as claimed in Claim 1, **characterised in that** the stamping or cutting process is effected without the removal of material.

3. Method of manufacturing a container (2) comprising a substantially stiff outer container and a readily deformable inner bag of different thermoplastic plastic materials with no welded connection, including a container opening and at least one wall opening in the outer container, through which a pressure balance occurs in the region between the inner bag and the outer container, wherein a preform comprising at least two tubes is co-extruded and is arranged between the open halves of a blow mould, the blow mould is closed, when the preform has the length necessary for producing the container, whereby excess material is squeezed away in the base region of the container to be produced and an outwardly projecting web is formed from welded material of the outer container, in which the welded base seam of the inner bag is clamped and held in the axial direction and the preform is inflated by a pressure medium until it engages the wall of the blow mould and is removed from the blow mould, **characterised in that** the at least one wall opening is formed by shaping a small bulge in the wall of the outer container with an inner recess and that the bulge is cut away or removed with the exception of a small remaining wall section and the remaining wall section is opened by the application of force.

4. Method as claimed in one of Claims 1 to 3, **characterised in that** the remaining wall section is split.

5. Method as claimed in Claim 4, **characterised in that** the wall is pressed inwardly on one side of the notch or the cut.

6. Method as claimed in Claim 3, **characterised in that** the bulge is cut away such that the remaining wall section is flush with the surrounding outer wall.

7. Method of manufacturing a container (2) comprising a substantially stiff outer container and a readily deformable inner bag of different thermoplastic plastic materials with no welded connection, including a container opening and at least one wall opening in the outer container, through which a pressure balance occurs in the region between the inner bag and the outer container, wherein a preform comprising at least two tubes is co-extruded and is arranged between the open halves of a blow mould, the blow mould is closed, when the preform has the length necessary for producing the container, whereby excess material is squeezed away in the base region of the container to be produced and an outwardly projecting web is formed from welded material of the outer container, in which the welded base seam of the inner bag is clamped and held in the axial direction and the preform is inflated by a pressure medium until it engages the wall of the blow mould and is removed from the blow mould, **characterised in that** the at least one wall opening is formed by piercing or boring through the wall of the outer container and that when the wall of the outer container has been completely penetrated a medium is injected or sprayed against the wall of the inner bag in order to prevent damage of the inner bag by the tool for piercing or boring.

8. Method as claimed in Claim 7, **characterised in that** the medium is injected or sprayed through a bore in the piercing needle or the borer.

9. Method as claimed in Claim 7 or 8, **characterised in that** the medium is air, water or a gel.

## Revendications

1. Procédé destiné à la fabrication d'un récipient (2) constitué d'un récipient extérieur sensiblement rigide et d'une poche intérieure pouvant être facilement déformée, en matières thermoplastiques respectivement différentes ne comportant pas de liaison soudée entre elles, avec un orifice de récipient et au moins un orifice de paroi pratiqué dans le récipient extérieur, par l'intermédiaire duquel une compensation de pression a lieu dans la zone située entre la poche intérieure et le récipient extérieur, dans lequel une ébauche constituée d'au moins deux boyaux est co-extrudée et disposée entre les moitiés ouvertes d'un moule de soufflage, le moule de soufflage est fermé lorsque l'ébauche présente la longueur nécessaire à la fabrication du récipient, du matériau excédentaire dans la zone de fond du récipient à fabriquer étant enlevé par pincement, et une barrette faisant saillie vers l'extérieur étant formée en matériau soudé du récipient extérieur, dans laquelle le cordon soudé du fond de la poche intérieure est enserré et retenu dans la direction axiale, et l'ébauche étant gonflée par un fluide sous pression pour sa mise en application contre la paroi du moule de soufflage, et étant retirée du moule de soufflage,
**caractérisé en ce que**
ledit au moins un orifice de paroi est réalisé par une découpe ou par une entaille qui est découpée ou poinçonnée dans la paroi du récipient extérieur, qui traverse la paroi à l'exception d'un faible tronçon de paroi restant, et **en ce que** le tronçon de paroi restant est ouvert par l'effet d'une force.

2. Procédé selon la revendication 1,
**caractérisé en ce que** le processus de poinçonnage ou de découpe est effectué sans enlèvement de copeaux.

3. Procédé destiné à la fabrication d'un récipient (2) constitué d'un récipient extérieur sensiblement rigide et d'une poche intérieure pouvant être facilement déformée, en matières thermoplastiques respectivement différentes ne comportant pas de liaison soudée entre elles, avec un orifice de récipient et au moins un orifice de paroi pratiqué dans le récipient extérieur, par l'intermédiaire duquel une compensation de pression a lieu dans la zone située entre la poche intérieure et le récipient extérieur, dans lequel une ébauche constituée d'au moins deux boyaux est co-extrudée et disposée entre les moitiés ouvertes d'un moule de soufflage, le moule de soufflage est fermé lorsque l'ébauche présente la longueur nécessaire à la fabrication du récipient, du matériau excédentaire dans la zone du fond du récipient à fabriquer étant enlevé par pincement, et une barrette faisant saillie vers l'extérieur étant formée en matériau soudé du récipient extérieur, dans laquelle le cordon soudé du fond de la poche intérieure est enserré et retenu dans la direction axiale, et l'ébauche étant gonflée par un fluide sous pression pour sa mise en application contre la paroi du moule de soufflage, et étant retirée du moule de soufflage,
**caractérisé en ce que** ledit au moins un orifice de paroi est réalisé par le fait de former dans la paroi extérieure une petite convexité avec saillie intérieure et **en ce qu'**à l'exception d'un faible tronçon de paroi restant, la convexité est découpée ou arasée, et **en ce que** le tronçon de paroi restant est ouvert par l'effet d'une force.

4. Procédé selon l'une des revendications 1 à 3,
**caractérisé en ce que** le tronçon de paroi restant est ouvert par déchirure.

5. Procédé selon la revendication 4,
**caractérisé en ce que** la paroi est repoussée vers l'intérieur d'un côté de l'entaille ou de la découpe.

6. Procédé selon la revendication 3,
**caractérisé en ce que** la convexité est enlevée par découpe de telle sorte que le tronçon de paroi restant soit aligné avec la paroi extérieure l'entourant.

7. Procédé destiné à la fabrication d'un récipient (2) constitué d'un récipient extérieur sensiblement rigide et d'une poche intérieure pouvant être facilement déformée, en matières thermoplastiques respectivement différentes ne comportant pas de liaison soudée entre elles, avec un orifice de récipient et au moins un orifice de paroi pratiqué dans le récipient extérieur, par l'intermédiaire duquel une compensation de pression a lieu dans la zone située entre la poche intérieure et le récipient extérieur, dans lequel une ébauche constituée d'au moins deux boyaux est co-extrudée et disposée entre les moitiés ouvertes d'un moule de soufflage, le moule de soufflage est fermé lorsque l'ébauche présente la longueur nécessaire à la fabrication du récipient, du matériau excédentaire dans la zone de fond du récipient à fabriquer étant enlevé par pincement, et une barrette faisant saillie vers l'extérieur étant formée en matériau soudé du récipient extérieur, dans laquelle le cordon soudé du fond de la poche intérieure est enserré et retenu dans la direction axiale, et l'ébauche étant gonflée par un fluide sous pression pour sa mise en application contre la paroi du moule de soufflage, et étant retirée du moule de soufflage,
**caractérisé en ce que** ledit au moins un orifice de paroi au moins est réalisé par le fait que la paroi du récipient extérieur est perforée ou percée, et **en ce que**, lorsque la paroi du récipient extérieur est entièrement traversée, un fluide est soufflé ou pulvérisé sur la paroi de la poche intérieure afin d'éviter une détérioration de la poche intérieure par l'outil de perforation ou de perçage.

8. Procédé selon la revendication 7,
**caractérisé en ce que** le fluide est soufflé ou pulvérisé par un perçage de la pointe de perforation ou du foret.

9. Procédé selon la revendication 7 ou 8,
**caractérisé en ce que** le fluide est de l'air, de l'eau ou un gel.
